# EUROPÄISCHE PATENTSCHRIFT

(11) **EP 4 449 960 B1**
(45) Veröffentlichungstag und Bekanntmachung des Hinweises auf die Patenterteilung: **27.08.2025**
(21) Anmeldenummer: 24170477.4
(22) Anmeldetag: 16.04.2024
(51) Int. Cl.: A47K 3/30

(54) **MONTAGESYSTEM UND VERFAHREN ZUM VERBINDEN EINES BAUTEILS MIT EINER WAND**
MOUNTING SYSTEM AND METHOD FOR CONNECTING A COMPONENT TO A WALL
SYSTÈME DE MONTAGE ET PROCÉDÉ DE RACCORDEMENT D'UN COMPOSANT À UNE PAROI

(30) Priorität: 17.04.2023 AT 502782023
(43) Veröffentlichungstag der Anmeldung: 23.10.2024
(73) Patentinhaber: TIF GmbH, 39042 Brixen (BZ) (IT)
(72) Erfinder: Rabensteiner, Alois, 39040 Villanders - Villandro (BZ) (IT)
(74) Vertreter: Schwarz & Partner Patentanwälte GmbH

(56) Entgegenhaltungen:
- DE-U1- 202008 012 393
- DE-U1- 202020 005 161

## Beschreibung

Die vorliegende Erfindung betrifft ein Montagesystem zur Verbindung eines Bauteils mit einer Wand, umfassend zumindest eine Montageplatte, wobei die Montageplatte eine Kontaktfläche und mindestens einen auf der gegenüberliegenden Seite der Kontaktfläche angeordneten Verbindungsabschnitt aufweist, und zumindest ein Halteelement zur Aufnahme des Bauteils, welches einen dem Verbindungsabschnitt korrespondierenden Gegenverbindungsabschnitt zur lösbaren Befestigung des Halteelements an der Montageplatte aufweist. Weiters betrifft die Erfindung eine Duschabtrennung, umfassend ein Wandprofil und ein Montagesystem. Schließlich betrifft die Erfindung ein Verfahren zum Befestigen eines Bauteils an einer Wand mit einem Montagesystem.

### HINTERGRUND DER ERFINDUNG

Die Montage von Bauteilen an einer Wand erfolgt gemäß Stand der Technik häufig über Profilleisten, die mit der Wand verschraubt werden, woraufhin das Bauteil an der Profilleiste befestigt wird. Mit einer solchen Art der Befestigung der Profilleiste ist aufgrund der erforderlichen Bohrung für eine Schraube eine Beschädigung der Wand verbunden. In vielen Fällen soll eine solche Beschädigung vermieden werden, z.B. dann, wenn das Bauteil nicht dauerhaft mit der Wand verbunden werden soll. Insbesondere im Sanitärbereich soll aus verschiedenen Gründen auf ein Anbohren der Wand - die oft mit Fliesen, Platten oder Beschichtungen versehen ist - verzichtet werden.

Alternative Lösungen zur Montage von Bauteilen an der Wand stellen z.B. Klebverbindungen dar, die ein Anbohren der Wand vermeiden. Klebstoffe nach Stand der Technik erlauben belastbare und dauerhafte Verbindungen zwischen Wand und Bauteil, die vergleichbar stabil zu Schraubverbindungen sind. Ein Montagesystem der eingangs genannten Gattung beschreibt z.B. die DE 20 2008 012 393 U1. Darin wird ein Montagesystem beschrieben, bei dem eine Montageplatte an einer Wand mit einem Doppelklebeband positioniert und vorfixiert wird. Die Montageplatte bildet einen Hohlraum, der seitlich vom Doppelklebeband und nach vorne von der Wand begrenzt wird. In den Hohlraum wird ein Klebstoff eingefüllt, der nach dem Aushärten die eigentliche Fixierung des Halteelements an der Wand sicherstellt. Die Vorfixierung der Montageplatte durch das Doppelklebeband ist an sich nur schwach und leicht lösbar, falls das Halteelement nicht richtig positioniert wird. Erst mit der eigentlichen Fixierung mit dem Klebstoff wird das Halteelement ausreichend stabil und belastbar mit der Wand verbunden. Auf das Halteelement wird anschließend ein Koppelelement aufgeschraubt, welches wiederum das Bauteil trägt.

Die Verbindung gemäß DE 20 2008 012 393 U1 ist grundsätzlich zwar belastbar und dauerhaft, allerdings ist die korrekte Vorfixierung und die anschließende endgültige Fixierung der Montageplatte verhältnismäßig kompliziert und die Gefahr eines Verrutschens eines Montageplatte nach der Vorfixierung verhältnismäßig groß, sodass diese Art der Montage nur von geschultem Personal durchgeführt werden sollte.

### KURZBESCHREIBUNG DER ERFINDUNG

Aufgabe der Erfindung ist daher die Bereitstellung eines Montagesystems und eines Verfahrens zum Befestigen eines Bauteils an einer Wand mit dem Montagesystem, welches ohne Schraubverbindung an der Wand auskommt und welches die genannten Nachteile von DE 20 2008 012 393 U1 vermeidet. Das Montagesystem soll es Heim- und Handwerkern erlauben, mit einfachen Mitteln eine belastbare und dauerhafte Verbindung zwischen der Wand und einem an einer Wand zu befestigenden Bauteil herzustellen.

Gelöst wird diese Aufgabe durch ein Montagesystem zur Verbindung eines Bauteils mit einer Wand, umfassend
zumindest eine Montageplatte, wobei die Montageplatte eine Kontaktfläche und mindestens einen auf der gegenüberliegenden Seite der Kontaktfläche angeordneten Verbindungsabschnitt aufweist, und
ein Halteelement zur Aufnahme des Bauteils, welches einen dem Verbindungsabschnitt korrespondierenden Gegenverbindungsabschnitt zur lösbaren Befestigung des Halteelements an der Montageplatte aufweist,
dadurch gekennzeichnet, dass
ein Montageadapter und eine Positionierhilfe vorgesehen sind,
wobei die Positionierhilfe über einen Grundkörper und eine Erhebung verfügt und wobei das Halteelement ein zur Erhebung formschlüssiges Montageloch aufweist,
wobei der Montageadapter eine erste Öffnung für die zumindest bereichsweise formschlüssige Aufnahme des Grundkörpers der Positionierhilfe aufweist,
wobei der Montageadapter eine zweite Öffnung für die zumindest bereichsweise formschlüssige Aufnahme der Montageplatte im Bereich der Kontaktfläche aufweist,
wobei der Montageadapter an der Vorderseite - vorzugsweise lösbar befestigbare - Klebemittel und an der Rückseite - vorzugsweise lösbar befestigbare - Klebemittel aufweist.

Gelöst wird diese Aufgabe außerdem durch ein Verfahren zum Befestigen eines Bauteils an einer Wand mit einem Montagesystem der vorgenannten Art, umfassend die Schritte
i. Einbringen der Positionierhilfe in das Montageloch des Halteelements, anschließend
ii. Einstecken des Montageadapters in die erste Öffnung des Grundkörpers der Positionierhilfe und Ankleben des Montageadapters an das Halteelement mit dem Klebemittel der Vorderseite, anschließend
iii. Entfernen der Positionierhilfe aus dem Halteelement, anschließend
iv. Positionieren des Halteelements an der Wand und Ankleben des Halteelements mit dem Klebemittel der Rückseite des Montageadapters, anschließend
v. Entfernen des Halteelements vom Montageadapter durch Lösen der Klebemittel an der Vorderseite des Montageadapters, anschließend
vi. Positionieren der Montageplatte in die zweite Öffnung der Montageplatte und Fügen der Montageplatte an die Wand, vorzugsweise Ankleben der Montageplatte an die Wand, anschließend
vii. Entfernen des Montageadapters durch Lösen der Klebemittel an der Rückseite des Montageadapters, anschließend
viii. Verbinden des Verbindungsabschnitts der Montageplatte mit dem Gegenverbindungsabschnitt des Halteelements, anschließend
ix. gegebenenfalls Verbinden des Bauteils mit dem Halteelement.

Nachfolgend werden Details und Ausführungsvarianten des Verfahrens und des Montagesystems gleichermaßen und gemeinsam beschrieben.

Das Montagesystem umfasst mindestens eine Montageplatte, die im Weiteren durch eine stoffschlüssige Verbindung, insbesondere eine Klebeverbindung, mit der Wand verbindbar ist.

Die Montageplatte verfügt über eine Kontaktfläche und mindestens einen auf der gegenüberliegenden Seite der Kontaktfläche angeordneten Verbindungsabschnitt, welcher der Verbindung für das an der Wand zu befestigende Bauteil dient. Der Verbindungsabschnitt kann ein Verbindungsfortsatz sein. Als Verbindungsfortsatz kommt z.B. ein Gewindestift oder eine Gewindehülse in Frage. Verbindungsabschnitt und Montageplatte können einstückig ausgebildet sein oder miteinander verbunden sein. Die Verbindung zwischen Verbindungsabschnitt und Montageplatte ist bevorzugt kraftschlüssig, beispielsweise eine Schweißverbindung, eine Nietverbindung oder eine Schraubverbindung.

Der Montageadapter ist - abgesehen vom Verbindungsabschnitt - vorzugsweise im Wesentlichen plattenförmig ausgebildet. Weiters kann er eine im Wesentlichen zur Umfangsform des Grundkörpers der Positionierhilfe formschlüssige Durchgangsbohrung aufweisen.

Die Erhebung der Positionierhilfe kann beliebig sein, beispielsweise in Form eines im Wesentlichen geraden Zylinders, was die Verarbeitung erleichtert. Die Grundfläche des Zylinders kann z.B. rechteckig, vorzugsweise mit abgerundeten Ecken, ausgebildet sein.

Der Verbindungsabschnitt kann in einen korrespondierenden Gegenverbindungsabschnitt des an der Wand zu befestigenden Bauteiles eingreifen und auf der gegenüberliegenden Seite des an der Wand zu befestigenden Bauteiles z.B. mit einem Verbindungselement kraftschlüssig befestigt werden.

Im bevorzugten Fall weist der Verbindungsabschnitt einen Verbindungsfortsatz und der korrespondierende Gegenverbindungsabschnitt eine Öffnung auf, wobei der Verbindungsfortsatz in die Öffnung eingreift. Besonders bevorzugt ist die Öffnung des an der Wand zu befestigenden Bauteiles größer als der Verbindungsfortsatz ausgebildet, um eine Justiermöglichkeit des an der Wand zu befestigenden Bauteils zu ermöglichen.

Bevorzugt wird die Montageplatte in einer rückwärtigen Ausnehmung des Halteelements für das an der Wand zu befestigenden Bauteiles eingesetzt, um das Halteelement zu kaschieren. Bevorzugt wird die Montageplatte in ihrer Größe so bemessen, dass der gewünschte Justierbereich innerhalb der rückwärtigen Ausnehmung des an der Wand zu befestigenden Bauteiles erreicht wird.

Für die eigentliche Befestigung des an der Wand zu befestigenden Bauteils, wird die Montageplatte zuerst mit der Wand stoffschlüssig verbunden. Aus dem Stand der Technik sind verschiedene Verfahren bekannt, die im Wesentlichen darauf beruhen, einen Montageadapter mit einer Klebstoffmasse zu versehen und diesen auf die Wand zu kleben. Dabei werden regelmäßig hohe Anforderungen an die fachliche Kompetenz des Ausführenden gestellt, gleichzeitig können Ungenauigkeiten bei der Positionierung der Verklebung mit der Wand entstehen, die mit den üblichen Systemen nicht oder unzureichend ausgeglichen werden können.

Die vorliegende Erfindung setzt genau hier an und vermeidet diese Ungenauigkeiten in der Positionierung der Verklebung. Erfindungsgemäß wird das Verfahren folgendermaßen ausgeführt:
In einem ersten Schritt wird auf der Rückseite des Halteelements für das an der Wand zu befestigenden Bauteil zumindest eine Positionierhilfe angebracht.

Die Positionierhilfe verfügt über eine Erhebung, die formschlüssig zum Montageloch des an der Wand zu befestigenden Bauteiles ausgebildet ist. Die Erhebung der Positionierhilfe wird in das Montageloch eingesteckt und sitzt dann formschlüssig fest. Anschließend wir über die Positionierhilfe der Montageadapter gesteckt. In einem bevorzugten Ausführungsbeispiel verfügt der Montageadapter zum einen über eine formschlüssige Ausnehmung in der Größe der Positionierhilfe, in die diese eingreift. Zum anderen verfügt der Montageadapter über eine formschlüssige Ausnehmung für die später aufzunehmende Montageplatte.

Das Klebemittel am Montageadapter weist bevorzugt ein Klebeband, vorzugsweise ein doppelseitiges Klebeband, auf. Bevorzugt weist das Klebeband einen klebfreien Anfassbereich auf, welcher über den Montageadapter seitlich hinausragt.

Klebebänder, welche an einem Ende einen klebfreien Anfassbereich aufweist, sind z.B. aus US 5,516,581 bekannt. Der Anfassbereich dient als Grifffläche für ein späteres Wiederablösen des Klebebandes. Ein einfaches Klebeband sorgt für eine Verdrehsicherung des Montageabschnitts. Zwei Klebebänder pro Seite erhöhen die Verdrehsicherung zusätzlich.

Der Klebstoff des jeweiligen Klebemittels sollte mittels manueller Einwirkung (durch Abheben) lösbar sein.

Je nach zu befestigendem Bauteil können mindestens eine oder auch mehrere Montageadapter entsprechend zum Einsatz kommen. Anschließend kann die jeweilige Positionierhilfe entfernt werden.

In der weiteren Anwendung wird das Halteelement nun mit dem angebrachten Montageadapter an die gewünschte Montageposition an der Wand gedrückt. In einem bevorzugten Ausführungsbeispiel ist der Montageadapter zur Wand hin mittels Klebemittel, vorzugweise doppelseitigem Klebeband, ausgestattet. Nach dem Andrücken des Montageadapters werden die bauteilseitigen Klebemittel gelöst und das Halteelement von der Wand weggehoben. Die Montageadapter verbleiben an der Wand an ihrer Position.

Zur besseren Befestigung der Montageplatte ist es vorteilhaft, wenn die Wand und/oder die Kontaktfläche der Montageplatte durch Aufrauhung und/oder Reinigung für die gewählte Fügetechnik vorbereitet wird.

Anschließend wird der Montageadapter oder die Wand mit einer Fügemasse bestrichen und der Montageadapter wird in die formschlüssige Aufnahme des Montageadapters gedrückt. Anschließend wird der Montageadapter, nach einem eventuellen Lösen der wandseitigen Klebemittel von der Wand weggehoben. Im Unterschied zu DE 20 2008 012 393 U1 verbleibt in diesem Fall das Klebemittel nicht an der Montageplatte. Das Fügemittel kann ein Klebstoff sein.

Nach einem eventuellen Entfernen überstehender Fügemasse ist die Montageplatte, gegebenenfalls nach einer erweiterten Aushärtezeit bereit zur Aufnahme des Halteelements.

Dieses wird nun so über die Montageplatte gesteckt, dass der Verbindungsabschnitt mit dem Gegenverbindungsabschnitt lösbar verbunden wird.

Im Fall einer Notwendigkeit, z.B. Wartung oder Reparatur, kann das Halteelement durch Lösen der Verbindung von Verbindungsabschnitt und Gegenverbindungsabschnitt von der Wand abgelöst und durch ein neues Bauteil ersetzt werden. Soll die Wand in ihrer Ursprungsbeschaffenheit wieder hergestellt werden, kann die Montageplatte, bei entsprechender zuvor getätigter Auswahl der Fügemasse, von der Wand abgehebelt oder durch Erhitzen mittels Heißluft bis zum Versagen der Fügemasse, abgenommen werden.

In den meisten Fällen wird das zu befestigende Bauteil mit dem Halteelement lösbar fixiert. Es ist allerdings auch denkbar, dass das zu befestigende Bauteil bereits in das Halteelement integriert ist oder mit dem Halteelement unlösbar verbunden ist.

Speziell für größere Halteelemente sind mehrere Montageplatten vorteilhaft.

Das Halteelement kann z.B. eine Profilleiste sein.

Die erste Öffnung des Montageadapters und die zweite Öffnung des Montageadapters können eine gemeinsame Öffnung bilden, die bereichsweise formschlüssig zum Grundkörper der Positionierhilfe und bereichsweise formschlüssig zum Bereich der Kontaktfläche der Montageplatte ausgebildet ist. Dies erleichtert die Herstellung des Montageadapters.

Besonders eignet sich das Montagesystem für Nasszellen, Duschabtrennungen (siehe Definition in DIN EN 14428/2019-07), Duschkabinen und Duschen. Daher ist erfindungsgemäß auch eine Duschabtrennung vorgesehen, umfassend ein Wandprofil und ein Montagesystem der vorgenannten zur Befestigung des Wandprofils an einer Wand, vorzugsweise einer Nasszelle oder Wandfliese.

### DETAILLIERTE BESCHREIBUNG DER ERFINDUNG

Weitere Vorteile und Details der Erfindung werden anhand von Figuren und der Figurenbeschreibung erläutert.
- Fig. 1: zeigt eine Positionierhilfe gemäß der Erfindung.
- Fig. 2: zeigt eine Ausführungsvariante eines Montageadapters gemäß der Erfindung.
- Fig. 3: zeigt eine weitere Ausführungsvariante eines Montageadapters gemäß der Erfindung.
- Fig. 4: zeigt die einzelnen Schritte eines erfindungsgemäßen Verfahrens und der beteiligten Komponenten des Montagesystems.

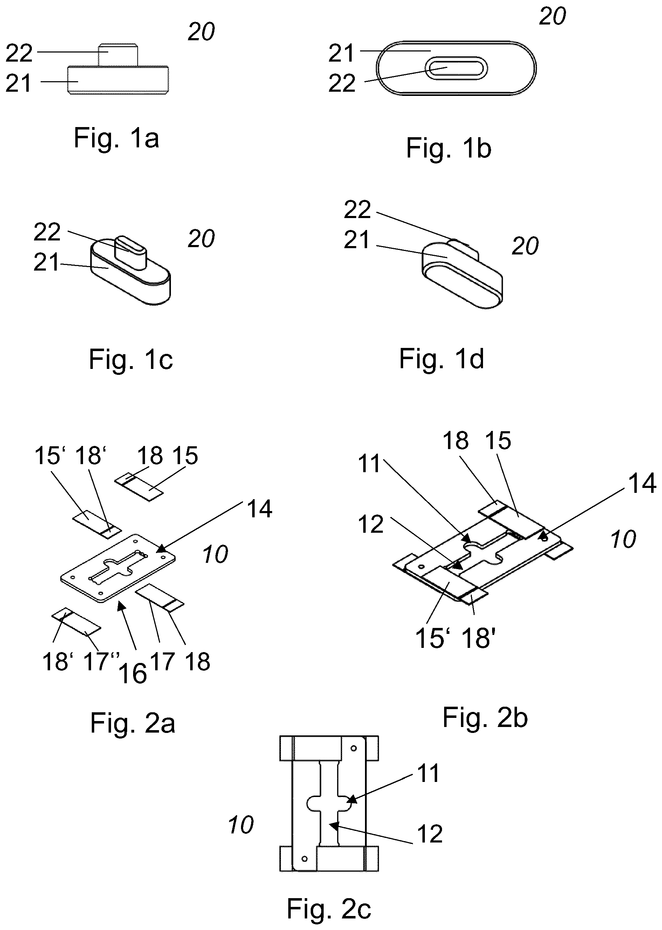

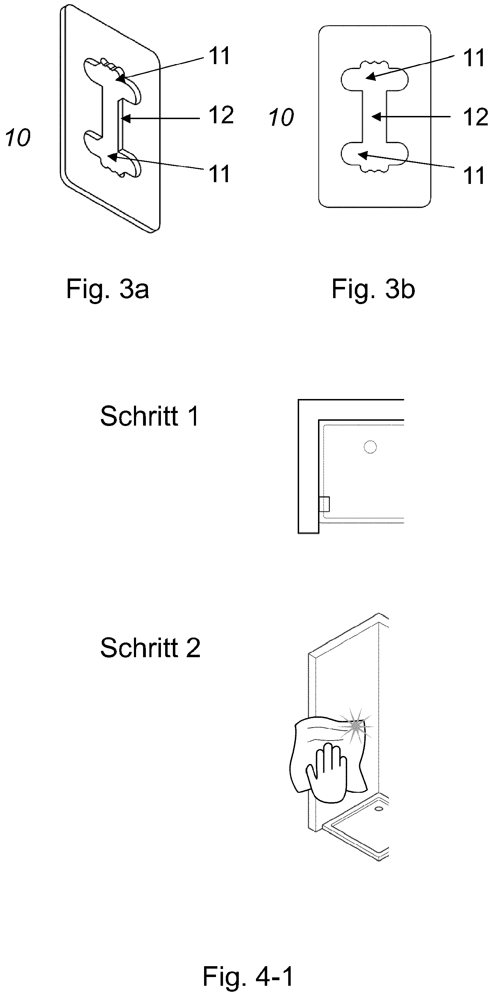

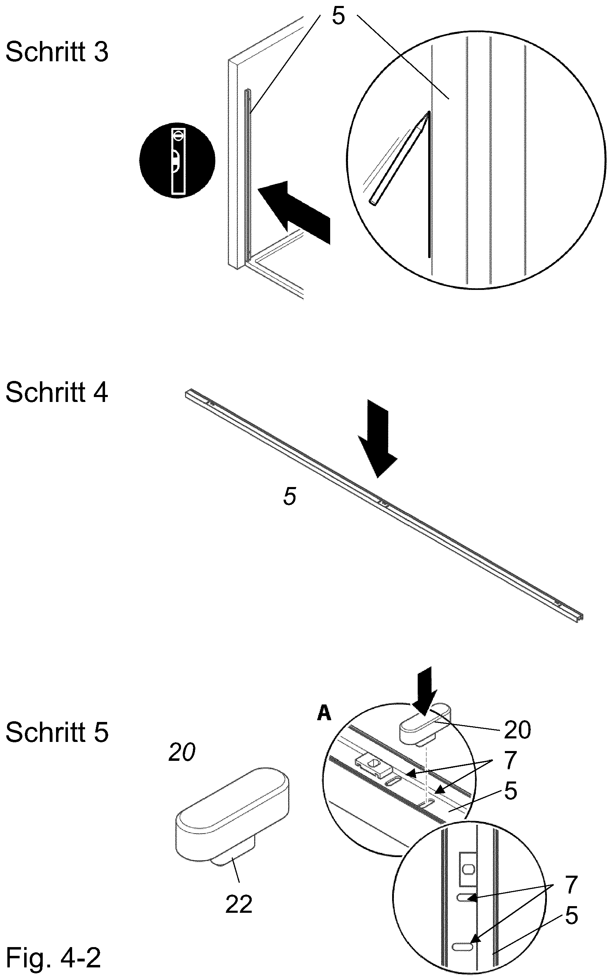

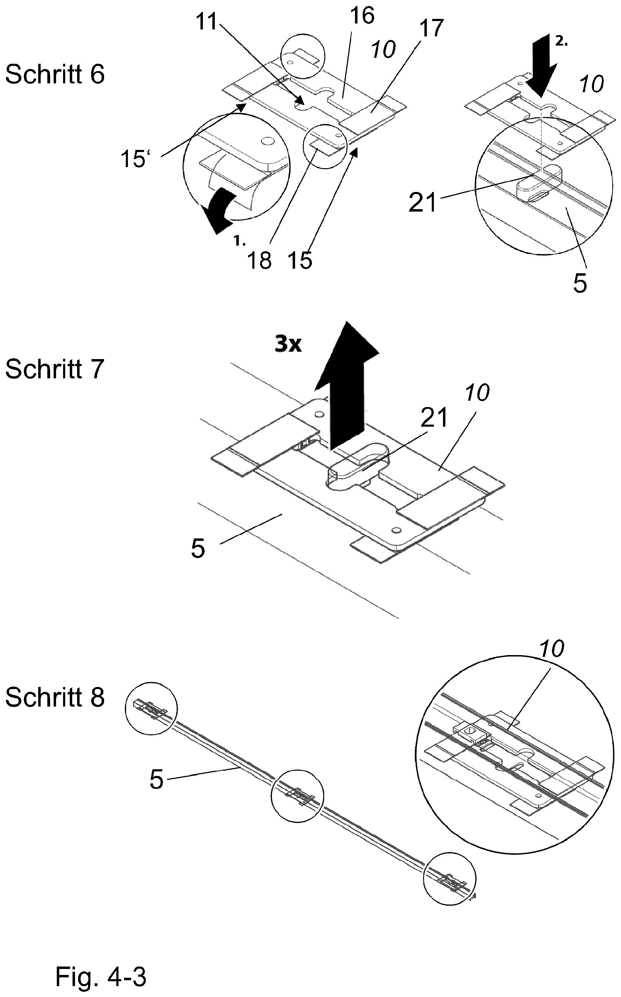

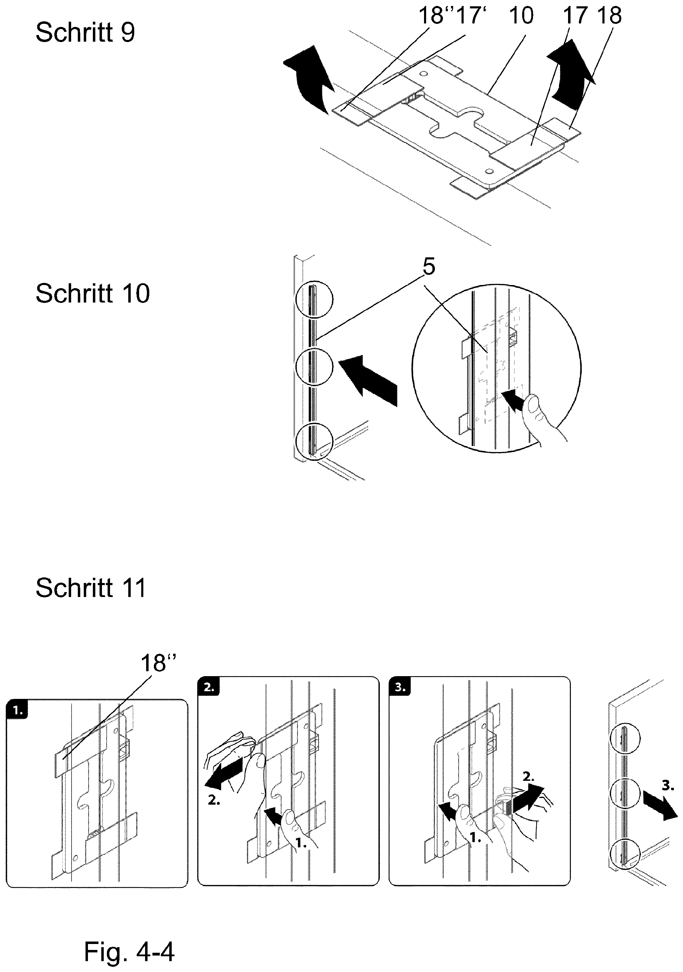

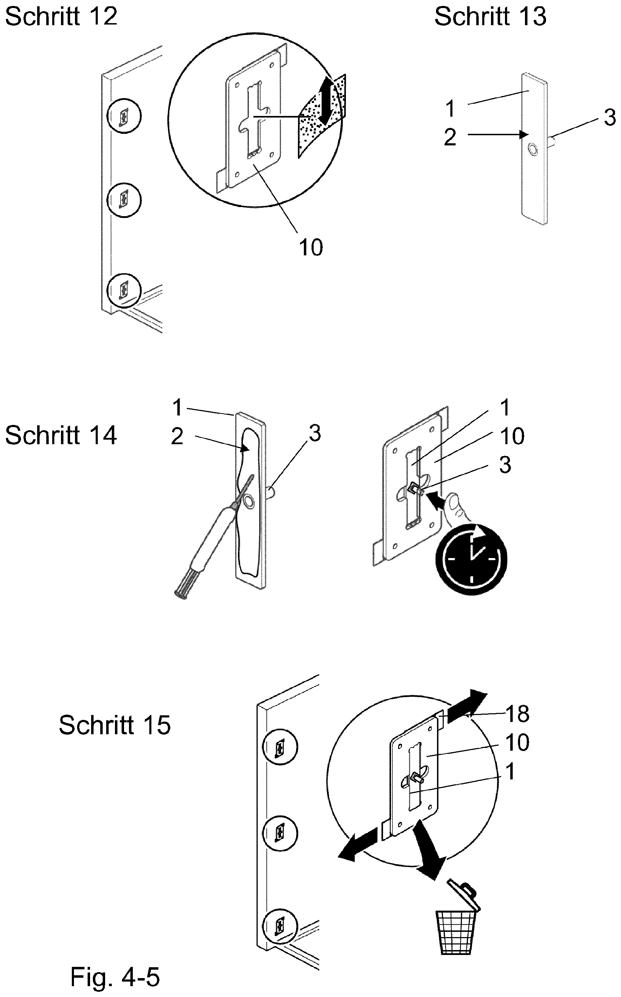

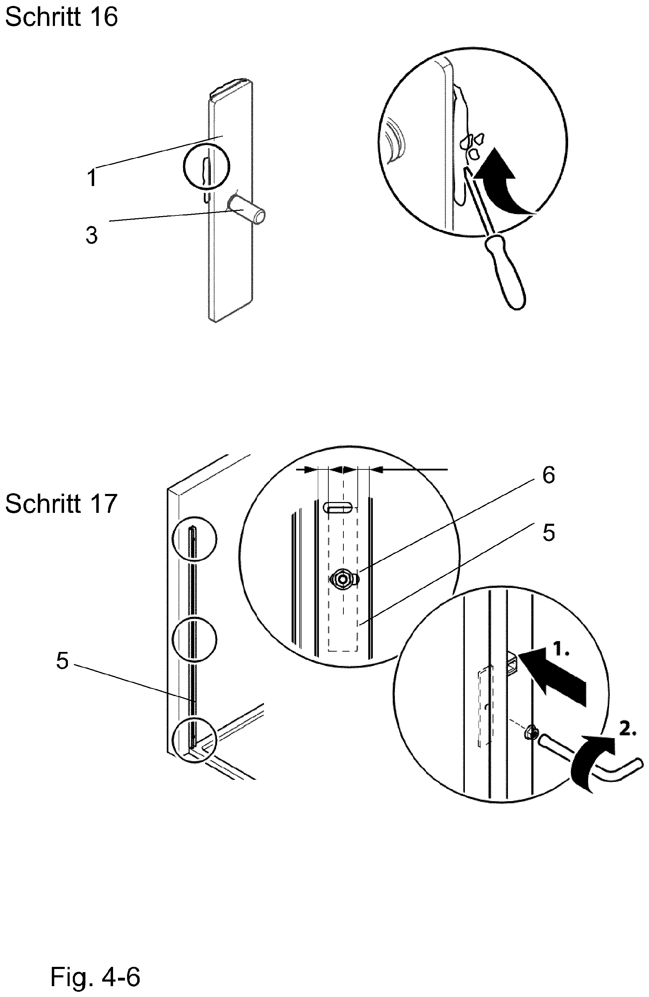

In Fig. 1 ist eine Positionierhilfe 20 in Seitenansicht (Fig. 1a), in Draufsicht (Fig. 1b) und in zwei Schrägrissansichten (Fig. 1c und 1d) gezeigt. Die Positionierhilfe 20 weist einen Grundkörper 21 auf, auf dem eine Erhebung 22 vorgesehen ist. Sowohl der Grundkörper 21 als auch die Erhebung 22 weisen jeweils eine Form auf, die einem geraden Zylinder entspricht. Die Grundfläche beider Zylinder ist etwa rechteckig mit abgerundeten Ecken ausgebildet. Die Erhebung 22 ist mittig auf dem Grundkörper 21 angeordnet. Die Erhebung 22 ist so ausgebildet, dass sie in ein formschlüssiges Montageloch 7 am Halteelement 5 passt (siehe Fig. 4). Die Positionierhilfe 20 kann z.B. aus Kunststoff gefertigt sein.

In Fig. 2 ist ein Montageadapter 10 dargestellt, wobei Fig. 2a eine Explosionsdarstellung (mit den Klebemitteln 15, 15'; 17, 17' abgehoben), Fig. 2b eine Schrägansicht und Fig. 2c eine Draufsicht zeigen. Der Montageadapter 10 verfügt über einen Plattenabschnitt, in dem sich eine erste Öffnung 11 befindet, die eine bereichsweise formschlüssige Aufnahme des Grundkörpers 21 der Positionierhilfe 20 aufweist. Die zweite Öffnung 12, die eine bereichsweise formschlüssige Aufnahme der Montageplatte 1 im Bereich der Kontaktfläche 2 ermöglicht, ist mit der ersten Öffnung 11 verbunden. Daher bilden erste Öffnung 11 der Montageplatte 10 und zweite Öffnung 12 der Montageplatte 10 eine gemeinsame Öffnung, die bereichsweise formschlüssig zum Grundkörper 21 der Positionierhilfe 20 und bereichsweise formschlüssig zum Bereich der Kontaktfläche 2 der Montageplatte 1 ausgebildet ist.

Der Montageadapter 10 verfügt an der Vorderseite 14 über Klebemittel 15, 15' und an der Rückseite 16 über Klebemittel 17, 17', jeweils in Form von zwei doppelseitigen Klebebändern. Die doppelseitigen Klebebänder weisen jeweils einen klebfreien Anfassbereich 18, 18' auf, welcher jeweils über den Montageadapter 10 seitlich hinausragt.

In der Ausführungsvariante des Montageadapters 10 der Fig. 3 (Fig. 3b in Schrägansicht und Fig. 3a in Draufsicht) sind im Plattenabschnitt neben der zweiten Öffnung 12 für die bereichsweise formschlüssige Aufnahme der Montageplatte, zwei erste Öffnungen 11 für die eine bereichsweise formschlüssige Aufnahme von Grundkörpern 21 von zwei Positionierhilfen 20 (die eine erste Öffnung 11 ist oben quer und die andere erste Öffnung 11 ist unten quer in Fig. 3a dargestellt). Dies ermöglicht das Einbringen von zwei Positionierhilfen 20 und hilft so die Gefahr des Verdrehens des Montageadapters 10 zu vermeiden. Auch hier bilden die beiden ersten Öffnungen 11 des Montageadapters 10 und die zweite Öffnung 12 des Montageadapters 10 eine gemeinsame Öffnung, die bereichsweise formschlüssig zum Grundkörper 21 der Positionierhilfe 20 und bereichsweise formschlüssig zum Bereich der Kontaktfläche 2 der Montageplatte 1 ausgebildet ist. Die Klebemittel 15, 15'; 17, 17' sind im Ausführungsbeispiel der Fig. 3 aus Übersichtlichkeitsgründen nicht gezeigt, können aber analog zum Ausführungsbeispiel der Fig. 2 am Randbereich befestigt sein.

Fig. 4-1 bis 4-6 zeigen einzelne Schritte des erfindungsgemäßen Verfahrens mit zusätzlichen optionalen Schritten, wobei einzelne Bauteile des Montagesystems gemeinsam mit der Beschreibung des Verfahrens erläutert werden. Das Verfahren zum Befestigen eines Bauteils an einer Wand mit einem erfindungsgemäßen Montagesystem wird anhand eines Wandprofils einer Duschabtrennung gezeigt.

Schritt 1 zeigt in Draufsicht einen Ausschnitt einer Duschwanne und im linken Abschnitt eine Wand an welcher im unteren Abschnitt (mit einem Rechteck markiert) das Wandprofil montiert werden soll. Das gleiche Vorgehen ist ebenfalls auf einer Badewanne oder direkt auf einem, z.B. gefliesten, Duschboden denkbar. Schritt 2 zeigt den Wandabschnitt von Schritt 1 in Schrägansicht, an dem das Wandprofil befestigt werden soll, wobei zunächst der Montagebereich fettfrei gereinigt werden kann. Dies kann z.B. mit Ethanol, Isopropanol, Aceton oder einer Mischung daraus, oder einem anderen geeigneten Lösungsmittel erfolgen.

In Schritt 3 kann das Halteelement 5 am Montagebereich an der Wand vorpositioniert werden und an der Wand kann eine Hilfslinie zur leichteren Repositionierung gezogen werden. In den Schritten 4 und 5 wird das Einbringen der Positionierhilfe 20 in ein Montageloch 7 des Halteelements 5 gezeigt. Dabei wird zunächst das Halteelement 5 in eine liegende Position gebracht (Schritt 4). Das Halteelement 5 ist als Profilschiene ausgebildet und weist mehrere zur Erhebung 22 der Positionierhilfe 20 formschlüssige Montagelöcher 7 auf. In ein geeignetes Montageloch 7 wird die Erhebung 22 der Positionierhilfe 20 eingeschoben.

In Schritt 6 wird der Montageadapter 10 über die erste Öffnung 11 über den Grundkörper 21 der Positionierhilfe 20 eingeführt. In diesem Schritt wird der Montageadapter 10 an das Halteelement 5 mit dem Klebemittel 15, 15' der Vorderseite 14 des Montageadapters 10 angeklebt. Dazu wurde auf den Montageadapter 10 ein Klebemittel in Form von zwei doppelseitigen Klebebändern 15, 15' bereits aufgeklebt. Durch Entfernen der Schutzfolie für das zweite Klebeband wird die Klebefläche des Klebemittels freigelegt und es kann die Vorderseite 14 des Montageadapters 10 auf das Haltelement 5 aufgeklebt werden. Zur besseren Fixierung des Montageadapters 10 sind zwei doppelseitige Klebebänder vorgesehen. Die doppelseitigen Klebebänder weisen außerdem einen Anfassbereich 18, 18' auf, der seitlich über den Montageadapter 10 hinausragt auf, der frei von Klebemittel ist.

In Schritt 7 wird sodann die Positionierhilfe 20 aus dem Halteelement 5 entfernt, indem sie aus dem Montageloch 7 gezogen wird.

In Schritt 8 ist gezeigt, dass mehrere Montagehilfen 10 auf diese Art auf das Haltelement 5 aufgebracht werden können.

Schritt 10 zeigt, die Positionierung des Halteelements 5 an der Wand und das Ankleben des Halteelements 10 mit dem Klebemittel 17, 17' der Rückseite 16 des Montageadapters 10, wobei die Klebemittel 17, 17' im vorherigen Schritt 9 freigelegt werden. Dazu sind an der Rückseite des Halteelements Klebemittel vorgesehen. Diese Klebemittel sind in Form von zwei doppelseitigen Klebebändern bereits aufgeklebt. Durch Entfernen der Schutzfolie für den zweiten Klebebandstreifen 17, 17' wird die Klebefläche des Klebemittel freigelegt und es kann die Rückseite 16 des Montageadapters 10 an die Wand angeklebt werden. In Schritt 11 wird die korrekte Position des Halteelements 5 geprüft und sodann wird das Halteelement 5 vom Montageadapter 5 durch Lösen der Klebemittel 15, 15' an der Vorderseite 14 des Montageadapters 10 wieder entfernt. Der Montageadapter 10 verbleibt dabei an der Wand, das Halteelement 5 kann allerdings entfernt werden.

Damit ist die zweite Öffnung 12 freigelegt, die gegebenenfalls nochmals gereinigt oder aufgeraut wird (z.B. mit Ethanol, Isopropanol, Aceton oder einer Mischung daraus, oder einem anderen geeigneten Lösungsmittel, Schritt 12).

In Schritt 13 ist die Kontaktfläche 2 der Montageplatte 1 gezeigt (die ebenfalls wie im vorherigen Schritt gereinigt werden kann).

In Schritt 14 wird in der zweiten Öffnung 12 die Montageplatte 1 positioniert und es erfolgt das Ankleben der Montageplatte 1 an die Wand. Dabei wird bevorzugt die Montageplatte 1 zuerst mit einem Klebstoff bestrichen und in die zweite Öffnung 12 eingeführt und angedrückt. Es ist ebenfalls möglich, den Klebstoff direkt auf die Wand im Bereich der zweiten Öffnung 12 zu streichen und anschließend die Montageplatte in die zweite Öffnung 12 einzuführen und anzudrücken Je nach Dauer der Aushärtezeit für den Klebstoff wird die Montageplatte 1 entsprechend lange und fest angedrückt.

Damit ist die Montageplatte 1 mit der Wand stoffschlüssig verbunden. Nach Aushärten des Klebstoffs wird der Montageadapter 10 wieder entfernt durch Lösen der Klebemittel 17, 17' an der Rückseite 16 des Montageadapters 10. Dazu wird am Anfassbereich 18, 18' des Klebebands gezogen und das doppelseitige Klebeband wieder entfernt (Schritt 15). Dadurch wird der Montageadapter 10 wieder von der Wand gelöst und es verbleibt nur mehr die Montageplatte 1 an der Wand. Klebereste können gemäß Schritt 16 noch mit einem Messer oder anderem geeignetem Werkzeug entfernt werden.

Schließlich wird in Schritt 17 der Verbindungsabschnitt 3 der Montageplatte 1 mit dem Gegenverbindungsabschnitt 6 des Halteelements 5 verbunden. Die Montageplatte 1 verfügt in diesem Fall über mindestens einen, kraftschlüssig mit der Montageplatte 1 verbundenen, Gewindestift, der als Verbindung für das an der Wand zu befestigende Bauteil dient. Der Gewindestift greift dazu in ein korrespondierendes Loch des Halteelements 5 ein und wird auf der gegenüberliegenden Seite des an der Wand zu befestigenden Bauteiles mittels Mutter kraftschlüssig befestigt, bevorzugt kann eine Kombination aus Beilagscheibe und Mutter eingesetzt werden. Bevorzugt wird das Loch des Halteelements größer als der Gewindestift ausgebildet, um eine Justiermöglichkeit des an der Wand zu befestigenden Bauteils zu ermöglichen.

Die Montageplatte 1 ist dabei bevorzugt in einer rückwärtigen Ausnehmung des Halteelements 5 eingesetzt, um dieses zu kaschieren. In diesem bevorzugten Ausführungsbeispiel ist die Montageplatte 1 in ihrer Größe so bemessen, dass der gewünschte Justierbereich innerhalb der rückwärtigen Ausnehmung des an der Wand zu befestigenden Bauteiles erreicht wird.

Ein Bauteil kann sodann in das Halteelement 5 eingeführt und mit dem Halteelement 5 verbunden werden. Das Bauteil kann alternative dazu in das Halteelement 5 integriert sein, sodass die gesonderte Montage des Bauteils an das Halteelement entfällt.

Im Fall einer Notwendigkeit, z.B. Wartung oder Reparatur, kann das Halteelement 5 durch Lösen der Mutter wieder an der Wand weggehoben werden und durch ein neues Halteelement 5 ersetzt werden. Soll die Wand in ihrer Ursprungsbeschaffenheit wieder hergestellt werden, können die Montageplatten 1, bei entsprechender zuvor getätigter Auswahl der Fügemasse, von der Wand abgehebelt oder durch Erhitzen mittels Heißluft bis zum Versagen der Fügemasse oder durch andere geeignete Techniken abgenommen werden.

## Patentansprüche

1. Montagesystem zur Verbindung eines Bauteils mit einer Wand, umfassend
zumindest eine Montageplatte (1), wobei die Montageplatte (1) eine Kontaktfläche (2) und mindestens einen auf der gegenüberliegenden Seite der Kontaktfläche (2) angeordneten Verbindungsabschnitt (3) aufweist, und
ein Halteelement (5) zur Aufnahme des Bauteils, welches einen dem Verbindungsabschnitt (3) korrespondierenden Gegenverbindungsabschnitt (6) zur lösbaren Befestigung des Halteelements (5) an der Montageplatte (1) aufweist,
**dadurch gekennzeichnet, dass**
ein Montageadapter (10) und eine Positionierhilfe (20) vorgesehen sind,
wobei die Positionierhilfe (20) über einen Grundkörper (21) und eine Erhebung (22) verfügt und wobei das Halteelement (5) ein zur Erhebung (22) formschlüssiges Montageloch (7) aufweist,
wobei der Montageadapter (10) eine erste Öffnung (11) für die zumindest bereichsweise formschlüssige Aufnahme des Grundkörpers (21) der Positionierhilfe (20) aufweist,
wobei der Montageadapter (10) eine zweite Öffnung (12) für die zumindest bereichsweise formschlüssige Aufnahme der Montageplatte (1) im Bereich der Kontaktfläche (2) aufweist, und
wobei der Montageadapter (10) an der Vorderseite (14) Klebemittel (15, 15') und an der Rückseite (16) Klebemittel (17, 17') aufweist.

2. Montagesystem nach Anspruch 1, **dadurch gekennzeichnet, dass** das Klebemittel (15, 15'; 17, 17') ein Klebeband, vorzugsweise ein doppelseitiges Klebeband aufweist.

3. Montagesystem nach Anspruch 2, **dadurch gekennzeichnet, dass** das Klebeband einen klebefreien Anfassbereich (18, 18') aufweist, welcher über den Montageadapter (10) seitlich hinausragt.

4. Montagesystem nach einem der Ansprüche 1 bis 3, **dadurch gekennzeichnet, dass** der Verbindungsabschnitt (3) der Montageplatte (1) einen Verbindungsfortsatz, insbesondere einen Gewindestift oder eine Gewindehülse, umfasst und dass der korrespondierende Gegenverbindungsabschnitt (6) des Halteelements eine Öffnung (7) für die Einbringung des Verbindungsfortsatzes aufweist.

5. Montagesystem nach einem der Ansprüche 1 bis 4, **dadurch gekennzeichnet, dass** der Montageadapter (10) im Wesentlichen plattenförmig ausgebildet ist und eine im Wesentlichen zur Umfangsform des Grundkörpers (21) der Positionierhilfe (20) formschlüssige Durchgangsbohrung aufweist.

6. Montagesystem nach einem der Ansprüche 1 bis 5, **dadurch gekennzeichnet, dass** die Erhebung (22) der Positionierhilfe (20) eine im Wesentlichen gerade Zylinderform aufweist.

7. Montagesystem nach einem der Ansprüche 1 bis 6, **dadurch gekennzeichnet, dass** das Bauteil mit dem Halteelement (5) lösbar fixierbar ist.

8. Montagesystem nach einem der Ansprüche 1 bis 7, **dadurch gekennzeichnet, dass** die erste Öffnung (11) der Montageplatte (10) und die zweite Öffnung (12) der Montageplatte (10) eine gemeinsame Öffnung bilden, wobei die gemeinsame Öffnung bereichsweise formschlüssig zum Grundkörper (21) der Positionierhilfe (20) und bereichsweise formschlüssig zum Bereich der Kontaktfläche (2) der Montageplatte ausgebildet ist.

9. Duschabtrennung, umfassend ein Wandprofil und ein Montagesystem nach einem der Ansprüche 1 bis 8 zur Befestigung des Wandprofils an einer Wand, vorzugsweise einer Nasszelle oder Wandfliese.

10. Verfahren zum Befestigen eines Bauteils an einer Wand mit einem Montagesystem nach einem der Ansprüche 1 bis 8, umfassend die Schritte:
i. Einbringen der Positionierhilfe (20) in das Montageloch (7) des Halteelements (1), anschließend
ii. Einstecken des Montageadapters (10) mit der ersten Öffnung (11) über den Grundkörper (21) der Positionierhilfe (20) und Ankleben des Montageadapters (10) an das Halteelement (5) mit dem Klebemittel (15, 15') der Vorderseite (14), anschließend
iii. Entfernen der Positionierhilfe (20) aus dem Halteelement (5), anschließend
iv. Positionieren des Halteelements (5) an der Wand und Ankleben des Halteelements (5) mit dem Klebemittel (17, 17') der Rückseite (16) des Montageadapters (10), anschließend
v. Entfernen des Halteelements (5) vom Montageadapter (10) durch Lösen der Klebemittel (15, 15') an der Vorderseite (14) des Montageadapters (10), anschließend
vi. Positionieren der Montageplatte (1) in die zweite Öffnung (12) der Montageplatte (10) und Fügen der Montageplatte (1) an die Wand, vorzugsweise Ankleben der Montageplatte (1) an die Wand, anschließend
vii. Entfernen des Montageadapters (10) durch Lösen der Klebemittel (17, 17') an der Rückseite (16) des Montageadapters (10), anschließend
viii. Verbinden des Verbindungsabschnitts (3) der Montageplatte (1) mit dem Gegenverbindungsabschnitt (6) des Halteelements (5), anschließend
ix. gegebenenfalls Verbinden des Bauteils mit dem Halteelement (5).

## Claims

1. Mounting system for connecting a component to a wall, comprising
at least one mounting plate (1), the mounting plate (1) having a contact surface (2) and at least one connecting portion (3) arranged on the opposite side of the contact surface (2), and
a holding element (5) for receiving the component, which has a mating connection section (6) corresponding to the connecting portion (3) for releasably fastening the holding element (5) to the mounting plate (1),
**characterized in that**
a mounting adapter (10) and a positioning aid (20) are provided,
wherein the positioning aid (20) has a base body (21) and an elevation (22) and wherein the holding element (5) has a mounting hole (7) which is positively engaged with the elevation (22),
wherein the mounting adapter (10) has a first opening (11) for receiving the base body (21) of the positioning aid (20) in a form-fitting manner, at least in some areas,
wherein the mounting adapter (10) has a second opening (12) for receiving the mounting plate (1) in the region of the contact surface (2) in a form-fitting manner, at least in some areas, and
wherein the mounting adapter (10) has adhesives (15, 15') on the front side (14) and adhesives (17, 17') on the rear side (16).

2. Mounting system according to claim 1, **characterized in that** the adhesive (15, 15'; 17, 17') comprises an adhesive tape, preferably a double-sided adhesive tape.

3. Mounting system according to claim 2, **characterized in that** the adhesive tape has a non-adhesive contact area (18, 18') which projects laterally beyond the mounting adapter (10).

4. Mounting system according to one of claims 1 to 3, **characterized in that** the connecting portion (3) of the mounting plate (1) comprises a connecting extension, in particular a threaded pin or a threaded sleeve, and **in that** the corresponding mating connecting section (6) of the holding element has an opening (7) for the insertion of the connecting extension.

5. Mounting system according to one of claims 1 to 4, **characterized in that** the mounting adapter (10) is essentially plate-shaped and has a through-hole that is essentially positive-locking to the circumferential shape of the base body (21) of the positioning aid (20).

6. Mounting system according to one of claims 1 to 5, **characterized in that** the elevation (22) of the positioning aid (20) has a substantially straight cylindrical shape.

7. Mounting system according to one of claims 1 to 6, **characterized in that** the component can be detachably fixed to the holding element (5).

8. Mounting system according to one of claims 1 to 7, **characterized in that** the first opening (11) of the mounting plate (10) and the second opening (12) of the mounting plate (10) form a common opening, wherein the common opening is formed in a regionally form-fitting manner with respect to the base body (21) of the positioning aid (20) and in a regionally form-fitting manner with respect to the region of the contact surface (2) of the mounting plate.

9. A shower enclosure comprising a wall profile and a mounting system according to any one of claims 1 to 8 for fixing the wall profile to a wall, preferably a wet room or wall tile.

10. A method of attaching a component to a wall with a mounting system according to any one of claims 1 to 8, comprising the steps of:
i. Insert the positioning aid (20) into the mounting hole (7) of the holding element (1), then
ii. Inserting the mounting adapter (10) with the first opening (11) over the base body (21) of the positioning aid (20) and gluing the mounting adapter (10) to the holding element (5) with the adhesive (15, 15') of the front side (14), then
iii. Remove the positioning aid (20) from the holding element (5), then
iv. Positioning the holding element (5) on the wall and gluing the holding element (5) with the adhesive (17, 17') on the rear side (16) of the mounting adapter (10), then
v. Remove the holding element (5) from the mounting adapter (10) by loosening the adhesives (15, 15') on the front (14) of the mounting adapter (10), then
vi. Positioning the mounting plate (1) in the second opening (12) of the mounting plate (10) and joining the mounting plate (1) to the wall, preferably gluing the mounting plate (1) to the wall, then
vii. Remove the mounting adapter (10) by loosening the adhesive (17, 17') on the rear side (16) of the mounting adapter (10), then
viii. Connecting the connecting section (3) of the mounting plate (1) to the mating connecting section (6) of the holding element (5), then
ix. Connecting the component to the holding element (5) if necessary.

## Revendications

1. Système de montage pour connecter un composant avec un mur, comprenant
au moins une plaque de montage (1), la plaque de montage (1) comportant une surface de contact (2) et au moins une section de connexion (3) disposée sur le côté opposé de la surface de contact (2), et
un élément de maintien (5) destiné à recevoir le composant et comportant une section de contre-connexion (6) correspondant à la section de connexion (3) pour fixer de manière amovible l'élément de maintien (5) à la plaque de montage (1),
**caractérisé en ce que**
un adaptateur de montage (10) et une aide au positionnement (20) sont prévus,
l'aide au positionnement (20) étant équipée d'un corps de base (21) et une saillie (22) et l'élément de maintien (5) comportant un trou de montage (7) relié par engagement positif à la saillie (22),
l'adaptateur de montage (10) ayant une première ouverture (11) pour recevoir le corps de base (21) de l'aide au positionnement (20) au moins localement par engagement positif,
l'adaptateur de montage (10) ayant une deuxième ouverture (12) pour recevoir la plaque de montage (1) dans la région de la surface de contact (2) au moins localement par engagement positif, et
l'adaptateur de montage (10) comportant des adhésifs (15, 15') sur la face avant (14) et comportant des adhésifs (17, 17') sur la face arrière (16).

2. Système de montage selon la revendication 1, **caractérisé en ce que** l'adhésif (15, 15'; 17, 17') comporte un ruban adhésif, de préférence un ruban adhésif double face.

3. Système de montage selon la revendication 2, **caractérisé en ce que** le ruban adhésif présente une zone de préhension (18, 18') sans adhésif qui dépasse latéralement de l'adaptateur de montage (10).

4. Système de montage selon l'une des revendications 1 à 3, **caractérisé en ce que** la section de connexion (3) de la plaque de montage (1) comprend une extension de connexion, en particulier une tige filetée ou un manchon fileté, et que la section de contre-connexion correspondante (6) de l'élément de maintien présente une ouverture (7) pour l'introduction de l'extension de connexion.

5. Système de montage selon l'une des revendications 1 à 4, **caractérisé en ce que** l'adaptateur de montage (10) est sensiblement en forme de plaque et comporte un alésage traversant qui est relié sensiblement par engagement positif à la forme périphérique du corps de base (21) de l'aide au positionnement (20).

6. Système de montage selon l'une des revendications 1 à 5, **caractérisé en ce que** la saillie (22) de l'aide au positionnement (20) a une forme sensiblement cylindrique droite.

7. Système de montage selon l'une des revendications 1 à 6, **caractérisé en ce que** le composant peut être fixé de manière amovible avec l'élément de maintien (5).

8. Système de montage selon l'une des revendications 1 à 7, **caractérisé en ce que** la première ouverture (11) de la plaque de montage (10) et la deuxième ouverture (12) de la plaque de montage (10) forment une ouverture commune, l'ouverture commune étant conçue localement par engagement positif par rapport au corps de base (21) de l'aide au positionnement (20) et localement par engagement positif par rapport à la zone de la surface de contact (2) de la plaque de montage.

9. Cloison de douche, comprenant un profil mural et un système de montage selon l'une des revendications 1 à 8 pour la fixation du profil mural à un mur, de préférence à une salle d'eau ou à un carrelage mural.

10. Procédé de fixation d'un composant à un mur à l'aide d'un système de montage selon l'une des revendications 1 à 8, comprenant les étapes suivantes:
i. introduire l'aide au positionnement (20) dans le trou de montage (7) de l'élément de maintien (1), puis
ii. insérer l'adaptateur de montage (10) avec la première ouverture (11) sur le corps de base (21) de l'aide au positionnement (20) et coller l'adaptateur de montage (10) sur l'élément de maintien (5) avec l'adhésif (15, 15') de la face avant (14), puis
iii. retirer l'aide au positionnement (20) de l'élément de maintien (5), puis
iv. positionner l'élément de maintien (5) sur le mur et coller l'élément de maintien (5) avec l'adhésif (17, 17') de la face arrière (16) de l'adaptateur de montage (10), puis
v. retirer l'élément de maintien (5) de l'adaptateur de montage (10) en desserrant les adhésifs (15, 15') sur la face avant (14) de l'adaptateur de montage (10), puis
vi. positionner la plaque de montage (1) dans la deuxième ouverture (12) de la plaque de montage (10) et assembler la plaque de montage (1) au mur, de préférence coller la plaque de montage (1) sur le mur, puis
vii. retirer l'adaptateur de montage (10) en desserrant les adhésifs (17, 17') sur la face arrière (16) de l'adaptateur de montage (10), puis
viii. connecter la section de connexion (3) de la plaque de montage (1) avec la section de contre-connexion (6) de l'élément de maintien (5), puis
ix. éventuellement connecter le composant avec l'élément de maintien (5).
